# EUROPEAN PATENT APPLICATION

(11) **EP 4 664 044 A1**
(43) Date of publication of application: **17.12.2025**
(21) Application number: 23923838.9
(22) Date of filing: 07.12.2023
(51) Int. Cl.: F26B 5/04

(54) **DRYING METHOD FOR LITHIUM ION BATTERY, AND LITHIUM BATTERY**

(30) Priority: 24.02.2023 CN 202310163857
(71) Applicant: Eve Power Co., Ltd., Jingmen, Hubei 448000 (CN)
(72) Inventor: SHEN, Juncai, Jingmen, Hubei 448000 (CN); LI, Heng, Jingmen, Hubei 448000 (CN)
(74) Representative: Nederlandsch Octrooibureau
(86) International application number: PCT/CN2023/137253
(87) International publication number: WO 2024/174675

(57) **Abstract**

A drying method for a lithium battery and a lithium battery are provided, including: step 1: placing a cell to be dried in an oven; Step 2: performing the following drying processes for a plurality of rounds: adjusting a temperature and a vacuum level in the oven, where the temperature and vacuum level are readjusted in the oven when performing the drying processes for a next time, and compared to the drying processes in a previous time, the temperature in the oven is decreased in a stepwise manner, and the vacuum level in the oven is increased in a stepwise manner; and step 3: performing a moisture test on the cell to be dried.

## Description

This application claims priority to Chinese Patent Application No. 2023101638574 filed with China National Intellectual Property Administration on February 24, 2023, the entire contents of which are incorporated herein by reference.

### TECHNICAL FIELD

The present application relates to the field of battery manufacturing technologies, and in particular to a drying method for a lithium-ion battery and a lithium battery.

### BACKGROUND

Lithium batteries are a type of battery that use lithium metal or lithium alloys as the positive/negative electrode materials and are generally used, and the moisture content has a great impact on the performance of the battery, such as the first discharge capacity of the battery, the quality of the solid electrolyte interphase (SEI) film, the internal resistance, and the cycle, and therefore, in the manufacturing process of the lithium battery, the moisture needs to be strictly controlled.

In the manufacturing process of the lithium battery, two baking processes are performed. One is the baking after coating, mainly using the air-circulation baking method. This process bakes out the N-methyl-2-pyrrolidone (NMP) in the slurry, so as to turn the wet film of the slurry into a dry film, which adheres to the current collector. The baking after coating will control the wet weight and the NMP residue. The other one is baking after assembly, mainly using a contact or air-circulation baking method in a vacuum state, so as to further reduce the moisture content of the electrode plates and separators of the assembled cell, so as to meet the control requirements of moisture content. The baking process has the problems of long baking time, low efficiency and high equipment cost.

### SUMMARY

The present application provides a drying method for a lithium-ion battery and a lithium battery, which may improve the technical problems of long baking time, low efficiency, and excessive cost of equipment investment in the existing drying technology.

In a first aspect, the present application provides a drying method for a lithium-ion battery, including:
step 1: placing a cell to be dried in an oven;
step 2: performing the following drying processes for a plurality of rounds: adjusting a temperature and a vacuum level in the oven, vacuum-drying the cell to be dried in the oven for a preset period of time under a certain temperature and a certain vacuum level, and releasing the vacuum in the oven; wherein when performing the drying processes for a next time, the temperature and the vacuum level in the oven are readjusted, so as to decrease the temperature in a stepwise manner compared to the drying processes in a previous time and so as to increase the vacuum level in a stepwise manner compared to the drying processes in the previous time; and
step 3: performing a moisture test on the cell to be dried; where if a test result is qualified, ending the drying, and if the test result is unqualified, repeating the step 2.

In a second aspect, the present application further provides a lithium battery, and a cell of the lithium battery is prepared by using the foregoing drying method for the lithium-ion battery.

### BENEFICIAL EFFECTS

The beneficial effects of the present application are as follows: the drying processes are performed in the cyclically repeated sequence of adjusting the temperature and vacuum level, drying for a certain period of time, and releasing the vacuum. Each time the drying processes are performed, the temperature and the vacuum level are readjusted. Compared with the drying processes in the previous time, the temperature is decreased successively and the vacuum level is increased successively. The overall baking time is short, the baking efficiency is high, and the required energy consumption is low. After performing the drying processes for multiple rounds, the consistency of the moisture in the baked cell is good, and the unqualified rate of moisture content after baking is low.

### DETAILED DESCRIPTION

The present application provides a drying method for a lithium-ion battery, including the following steps.

At step 1, a cell to be dried is placed in an oven.

At step 2, the following drying processes are performed for a plurality of rounds.
(1) the temperature and the vacuum level in the oven are adjusted.
(2) the cell to be dried is placed in an oven to be baked for a preset period of time under a certain temperature and vacuum level.
(3) the vacuum in the oven is released.

The temperature and vacuum level are readjusted in the oven when performing the drying processes (1) to (3) for a next time, and compared to the drying processes (1) to (3) in a previous time, the temperature in the oven is decreased in a stepwise manner, and the vacuum level in the oven is increased in a stepwise manner.

At step 3, a moisture test is performed on the cell to be dried, where if a test result is qualified, the drying is ended, and if the test result is unqualified, the step 2 is repeated.

In some embodiments, in step 2, the drying processes are performed for three times, and when the drying processes are performed for the first time, the temperature in the oven is adjusted to T1, the vacuum level is adjusted to P1, and a period of time for vacuum drying the cell to be dried in the oven is h1. When the drying processes are performed for the second time, the temperature in the oven is adjusted to T2, the vacuum level is adjusted to P2, and a period of time for vacuum drying the cell to be dried in the oven is h2. When the drying processes are performed for the third time, the temperature in the oven is adjusted to T3, a period of time for vacuum drying the cell to be dried in the oven is h3, and the vacuum level is adjusted to P3, where T1, T2, and T3 satisfy: T1 > T2 > T3, and P1, P2, and P3 satisfy: P1 <P2 < P3.

The temperature in the oven is adjusted to T2, the vacuum level is adjusted to P2, after releasing vacuum, the temperature in the oven is adjusted again to T3, and the vacuum level is adjusted again to P3, where T1, T2, and T3 satisfy: T1 > T2> T3, and P1, P2, and P3 satisfy: P1 < P2< P3.

T1, T2, and T3 further satisfy: 80 °C ≤ T1 ≤ 120°C, 60 °C ≤ T2 ≤ 100 °C, and 40 °C ≤ T3 ≤ 80°C; P1, P2, and P3 satisfy: 10 Pa ≤ P1 ≤ 100 Pa, 100 Pa ≤ P2 ≤ 300 Pa, and 200 Pa ≤ P3 ≤ 500 Pa; and h1, h2, and h3 satisfy: 60 minutes ≤ h1 ≤200 minutes, 10 minutes ≤ h2 ≤ 300 minutes, 200 minutes ≤ h3 ≤ 500 minutes.

In some embodiments, before step 2, the oven is preheated, and the preheating temperature for the oven is T1, where T1 satisfy: 80 °C ≤ T1 ≤ 120 °C.

In some embodiments, a period of time for preheating the oven is h4, where h4 satisfies: 40 minutes ≤ h4 ≤ 100 minutes.

In some embodiments, in step 2, the baked moisture is displaced by introducing inert gas into the oven for releasing vacuum.

In some embodiments, the inert gas may be at least one of helium, neon, argon, krypton, xenon, and nitrogen.

In some embodiments, the purity of nitrogen is greater than or equal to 99.9%.

The present application further provides a lithium battery, and a cell of the lithium battery is prepared by using the foregoing drying method for the lithium-ion battery.

### Embodiment 1

The present application provides a drying method for a lithium-ion battery, including the following steps.

At step 1, a cell to be dried was placed in an oven.

At step 2, the following drying processes was performed for three times.

When the drying processes was performed for the first time, the temperature in the oven was adjusted to T1, the vacuum level was adjusted to P1, a period of time for vacuum drying the cell to be dried was h1, where T1 was 120 °C, P1 was 10 Pa, and h1 was 200 minutes, and then the vacuum was released.

When the drying processes was performed for the second time, the temperature in the oven was adjusted to T2, the vacuum level was adjusted to P2, a period of time for vacuum drying the cell to be dried was h2, where T2 was 100 °C, P2 was 100 Pa, and h2 was 300 minutes, and then the vacuum was released.

When the drying processes was performed for the third time, the temperature in the oven was adjusted to T3, the vacuum level was adjusted to P3, a period of time for vacuum drying the cell to be dried was h3, where T3 was 80 °C, P3 was 200 Pa, and h3 was 500 minutes, and then the vacuum was released.

At step 3, a moisture test was performed on the cell to be dried, where if a test result was qualified, the drying was ended, and if the test result was unqualified, the step 2 was repeated.

### Embodiment 2

The differences between Embodiment 2 and Embodiment 1 are as follows.

In step 2, when the drying processes was performed for the first time, the temperature in the oven was adjusted to T1, the vacuum level was adjusted to P1, a period of time for vacuum drying the cell to be dried was h1, where T1 was 110 °C, P1 was 10 Pa, and h1 was 200 minutes.

In step 2, the drying processes was performed for the second time, the temperature in the oven was adjusted to T2, the vacuum level was adjusted to P2, a period of time for vacuum drying the cell to be dried was h2, where T2 was 90 °C, P2 was 100 Pa, and h2 was 300 minutes.

In step 2, when the drying processes was performed for the third time, the temperature in the oven was adjusted to T3, the vacuum level was adjusted to P3, a period of time for vacuum drying the cell to be dried was h3, where T3 was 70 °C, P3 was 200 Pa, and h3 was 500 minutes.

### Embodiment 3

The differences between Embodiment 3 and Embodiment 1 are as follows.

In step 2, when the drying processes was performed for the first time, the temperature in the oven was adjusted to T1, the vacuum level was adjusted to P1, a period of time for vacuum drying the cell to be dried was h1, where T1 was 100 °C, P1 was 10 Pa, and h1 was 200 minutes.

In step 2, when the drying processes was performed for the second time, the temperature in the oven was adjusted to T2, the vacuum level was adjusted to P2, a period of time for vacuum drying the cell to be dried was h2, where T2 was 80 °C, P2 was 100 Pa, and h2 was 300 minutes.

In step 2, the drying processes was performed for the third time, the temperature in the oven was adjusted to T3, the vacuum level was adjusted to P3, a period of time for vacuum drying the cell to be dried was h3, where T3 was 60 °C, P3 was 200 Pa, and h3 was 500 minutes.

### Embodiment 4

The differences between Embodiment 4 and Embodiment 1 are as follows.

In step 2, when the drying processes was performed for the first time, the temperature in the oven was adjusted to T1, the vacuum level was adjusted to P1, a period of time for vacuum drying the cell to be dried was h1, where T1 was 90 °C, P1 was 10 Pa, and h1 was 200 minutes.

In step 2, when the drying processes was performed for the second time, the temperature in the oven was adjusted to T2, the vacuum level was adjusted to P2, a period of time for vacuum drying the cell to be dried was h2, where T2 was 70 °C, P2 was 100 Pa, and h2 was 300 minutes.

In step 2, when the drying processes was performed for the third time, the temperature in the oven was adjusted to T3, the vacuum level was adjusted to P3, a period of time for vacuum drying the cell to be dried was h3, where T3 was 50 °C, P3 was 200 Pa, and h3 was 500 minutes.

### Embodiment 5

The differences between Embodiment 5 and Embodiment 1 are as follows.

In step 2, when the drying processes was performed for the first time, the temperature in the oven was adjusted to T1, the vacuum level was adjusted to P1, a period of time for vacuum drying the cell to be dried was h1, where T1 was 80 °C, P1 was 10 Pa, and h1 was 200 minutes.

In step 2, when the drying processes was performed for the second time, the temperature in the oven was adjusted to T2, the vacuum level was adjusted to P2, a period of time for vacuum drying the cell to be dried was h2, where T2 was 60 °C, P2 was 100 Pa, and h2 was 300 minutes.

In step 2, when the drying processes was performed for the third time, the temperature in the oven was adjusted to T3, the vacuum level was adjusted to P3, a period of time for vacuum drying the cell to be dried was h3, where T3 was 40 °C, P3 was 200 Pa, and h3 was 500 minutes.

### Embodiment 6

The differences between Embodiment 6 and Embodiment 1 are as follows.

In step 2, when the drying processes was performed for the first time, the temperature in the oven was adjusted to T1, the vacuum level was adjusted to P1, a period of time for vacuum drying the cell to be dried was h1, where T1 was 120 °C, P1 was 50 Pa, and h1 was 100 minutes.

In step 2, when the drying processes was performed for the second time, the temperature in the oven was adjusted to T2, the vacuum level was adjusted to P2, a period of time for vacuum drying the cell to be dried was h2, where T2 was 100 °C, P2 was 150 Pa, and h2 was 200 minutes.

In step 2, when the drying processes was performed for the third time, the temperature in the oven was adjusted to T3, the vacuum level was adjusted to P3, a period of time for vacuum drying the cell to be dried was h3, where T3 was 80 °C, P3 was 250 Pa, and h3 was 300 minutes.

### Embodiment 7

The differences between Embodiment 7 and Embodiment 1 are as follows.

In step 2, when the drying processes was performed for the first time, the temperature in the oven was adjusted to T1, the vacuum level was adjusted to P1, a period of time for vacuum drying the cell to be dried was h1, where T1 was 110 °C, P1 was 50 Pa, and h1 was 100 minutes.

In step 2, when the drying processes was performed for the second time, the temperature in the oven was adjusted to T2, the vacuum level was adjusted to P2, a period of time for vacuum drying the cell to be dried was h2, where T2 was 90 °C, P2 was 150 Pa, and h2 was 200 minutes.

In step 2, when the drying processes was performed for the third time, the temperature in the oven was adjusted to T3, the vacuum level was adjusted to P3, a period of time for vacuum drying the cell to be dried was h3, where T3 was 70 °C, P3 was 250 Pa, and h3 was 300 minutes.

### Embodiment 8

The differences between Embodiment 8 and Embodiment 1 are as follows.

In step 2, when the drying processes was performed for the first time, the temperature in the oven was adjusted to T1, the vacuum level was adjusted to P1, a period of time for vacuum drying the cell to be dried was h1, where T1 was 100 °C, P1 was 50 Pa, and h1 was 100 minutes.

In step 2, when the drying processes was performed for the second time, the temperature in the oven was adjusted to T2, the vacuum level was adjusted to P2, a period of time for vacuum drying the cell to be dried was h2, where T2 was 80 °C, P2 was 150 Pa, and h2 was 200 minutes.

In step 2, when the drying processes was performed for the third time, the temperature in the oven was adjusted to T3, the vacuum level was adjusted to P3, a period of time for vacuum drying the cell to be dried was h3, where T3 was 60 °C, P3 was 250 Pa, and h3 was 300 minutes.

### Embodiment 9

The differences between Embodiment 9 and Embodiment 1 are as follows.

In step 2, when the drying processes was performed for the first time, the temperature in the oven was adjusted to T1, the vacuum level was adjusted to P1, a period of time for vacuum drying the cell to be dried was h1, where T1 was 90 °C, P1 was 50 Pa, and h1 was 100 minutes.

In step 2, when the drying processes was performed for the second time, the temperature in the oven was adjusted to T2, the vacuum level was adjusted to P2, a period of time for vacuum drying the cell to be dried was h2, where T2 was 70 °C, P2 was 150 Pa, and h2 was 200 minutes.

In step 2, when the drying processes was performed for the third time, the temperature in the oven was adjusted to T3, the vacuum level was adjusted to P3, a period of time for vacuum drying the cell to be dried was h3, where T3 was 50 °C, P3 was 250 Pa, and h3 was 300 minutes.

### Embodiment 10

The differences between Embodiment 10 and Embodiment 1 are as follows.

In step 2, when the drying processes was performed for the first time, the temperature in the oven was adjusted to T1, the vacuum level was adjusted to P1, a period of time for vacuum drying the cell to be dried was h1, where T1 was 80 °C, P1 was 50 Pa, and h1 was 100 minutes.

In step 2, when the drying processes was performed for the second time, the temperature in the oven was adjusted to T2, the vacuum level was adjusted to P2, a period of time for vacuum drying the cell to be dried was h2, where T2 was 60 °C, P2 was 150 Pa, and h2 was 200 minutes.

In step 2, when the drying processes was performed for the third time, the temperature in the oven was adjusted to T3, the vacuum level was adjusted to P3, a period of time for vacuum drying the cell to be dried was h3, where T3 was 40 °C, P3 was 250 Pa, and h3 was 300 minutes.

### Embodiment 11

The differences between Embodiment 11 and Embodiment 1 are as follows.

In step 2, when the drying processes was performed for the first time, the temperature in the oven was adjusted to T1, the vacuum level was adjusted to P1, a period of time for vacuum drying the cell to be dried was h1, where T1 was 120 °C, P1 was 100 Pa, and h1 was 60 minutes.

In step 2, when the drying processes was performed for the second time, the temperature in the oven was adjusted to T2, the vacuum level was adjusted to P2, a period of time for vacuum drying the cell to be dried was h2, where T2 was 100 °C, P2 was 300 Pa, and h2 was 10 minutes.

In step 2, when the drying processes was performed for the third time, the temperature in the oven was adjusted to T3, the vacuum level was adjusted to P3, a period of time for vacuum drying the cell to be dried was h3, where T3 was 80 °C, P3 was 500 Pa, and h3 was 200 minutes.

### Embodiment 12

The differences between Embodiment 12 and Embodiment 1 are as follows.

In step 2, when the drying processes was performed for the first time, the temperature in the oven was adjusted to T1, the vacuum level was adjusted to P1, a period of time for vacuum drying the cell to be dried was h1, where T1 was 110 °C, P1 was 100 Pa, and h1 was 60 minutes.

In step 2, when the drying processes was performed for the second time, the temperature in the oven was adjusted to T2, the vacuum level was adjusted to P2, a period of time for vacuum drying the cell to be dried was h2, where T2 was 90 °C, P2 was 300 Pa, and h2 was 10 minutes.

In step 2, when the drying processes was performed for the third time, the temperature in the oven was adjusted to T3, the vacuum level was adjusted to P3, a period of time for vacuum drying the cell to be dried was h3, where T3 was 70 °C, P3 was 500 Pa, and h3 was 200 minutes.

### Embodiment 13

The differences between Embodiment 13 and Embodiment 1 were as follows.

In step 2, when the drying processes was performed for the first time, the temperature in the oven was adjusted to T1, the vacuum level was adjusted to P1, a period of time for vacuum drying the cell to be dried was h1, where T1 was 100 °C, P1 was 100 Pa, and h1 was 60 minutes.

In step 2, when the drying processes was performed for the second time, the temperature in the oven was adjusted to T2, the vacuum level was adjusted to P2, a period of time for vacuum drying the cell to be dried was h2, where T2 was 80 °C, P2 was 300 Pa, and h2 was 10 minutes.

In step 2, when the drying processes was performed for the third time, the temperature in the oven was adjusted to T3, the vacuum level was adjusted to P3, a period of time for vacuum drying the cell to be dried was h3, where T3 was 60 °C, P3 was 500 Pa, and h3 was 200 minutes.

### Embodiment 14

The differences between Embodiment 14 and Embodiment 1 were as follows.

In step 2, when the drying processes was performed for the first time, the temperature in the oven was adjusted to T1, the vacuum level was adjusted to P1, a period of time for vacuum drying the cell to be dried was h1, where T1 was 90 °C, P1 was 100 Pa, and h1 was 60 minutes.

In step 2, when the drying processes was performed for the second time, the temperature in the oven was adjusted to T2, the vacuum level was adjusted to P2, a period of time for vacuum drying the cell to be dried was h2, where T2 was 70 °C, P2 was 300 Pa, and h2 was 10 minutes.

In step 2, when the drying processes was performed for the third time, the temperature in the oven was adjusted to T3, the vacuum level was adjusted to P3, a period of time for vacuum drying the cell to be dried was h3, where T3 was 50 °C, P3 was 500 Pa, and h3 was 200 minutes.

### Embodiment 15

The differences between Embodiment 15 and Embodiment 1 were as follows.

In step 2, when the drying processes was performed for the first time, the temperature in the oven was adjusted to T1, the vacuum level was adjusted to P1, a period of time for vacuum drying the cell to be dried was h1, where T1 was 80 °C, P1 was 100 Pa, and h1 was 60 minutes.

In step 2, when the drying processes was performed for the second time, the temperature in the oven was adjusted to T2, the vacuum level was adjusted to P2, a period of time for vacuum drying the cell to be dried was h2, where T2 was 60 °C, P2 was 300 Pa, and h2 was 10 minutes.

In step 2, when the drying processes was performed for the third time, the temperature in the oven was adjusted to T3, the vacuum level was adjusted to P3, a period of time for vacuum drying the cell to be dried was h3, where T3 was 40 °C, P3 was 500 Pa, and h3 was 200 minutes.

### Comparative Example 1

The cell to be dried was placed in an oven, with a constant temperature and a constant vacuum level in the oven. The temperature was 95 °C and the vacuum level was 10 Pa.

### Comparative Example 2

The cell to be dried was placed in an oven, with a constant temperature and a constant vacuum level in the oven. The temperature was 95 °C and the vacuum level was 50 Pa.

### Comparative Example 3

The cell to be dried was placed in an oven, with a constant temperature and a constant vacuum level in the oven. The temperature was 95 °C and the vacuum level was 100 Pa.

### Conclusion and Analysis

The effects of the embodiments and comparative examples on the drying effect are shown in Table 1.

**Table 1**

| Grouping | Moisture Content | Total Drying Duration | Qualified Rate |
|---|---|---|---|
| Embodiment 1 | Positive Electrode: 74.65 ppm; | 1060 min | 100% |
| | Negative Electrode: 115.39 ppm | | |
| Embodiment 2 | Positive Electrode: 85.43 ppm; | 1060 min | 100% |
| | Negative Electrode: 138.06 ppm | | |
| Embodiment 3 | Positive Electrode: 88.87 ppm; | 1060 min | 100% |
| | Negative Electrode: 134.68 ppm | | |
| Embodiment 4 | Positive Electrode: 90.75 ppm; | 1060 min | 100% |
| | Negative Electrode: 145.99 ppm | | |
| Embodiment 5 | Positive Electrode: 92.63 ppm; | 1060 min | 100% |
| | Negative Electrode: 157.31 ppm | | |
| Embodiment 6 | Positive Electrode: 95.81 ppm; | 660 min | 100% |
| | Negative Electrode: 101.65 ppm | | |
| Embodiment 7 | Positive Electrode: 114.04 ppm; | 660 min | 100% |
| | Negative Electrode: 125.52 ppm | | |
| Embodiment 8 | Positive Electrode: 112.95 ppm; | 660 min | 100% |
| | Negative Electrode: 144.87 ppm | | |
| Embodiment 9 | Positive Electrode: 124.42 ppm; | 660 min | 100% |
| | Negative Electrode: 158.74 ppm | | |
| Embodiment 10 | Positive Electrode: 134.03 ppm; | 660 min | 100% |
| | Negative Electrode: 169.80 ppm | | |
| Embodiment 11 | Positive Electrode: 110.63 ppm; | 330 min | 100% |
| | Negative Electrode: 139.76 ppm | | |
| Embodiment 12 | Positive Electrode: 125.00 ppm; | 330 min | 100% |
| | Negative Electrode: 122.19 ppm | | |
| Embodiment 13 | Positive Electrode: 156.07 ppm; | 330 min | 100% |
| | Negative Electrode: 153.95 ppm | | |
| Embodiment 14 | Positive Electrode: 162.19 ppm; | 330 min | 100% |
| | Negative Electrode: 149.34 ppm | | |
| Embodiment 15 | Positive Electrode: 174.35 ppm; | 330 min | 100% |
| | Negative Electrode: 169.08 ppm | | |
| Comparative Example 1 | Positive Electrode: 111.48 ppm; | 1260 min | 98.95% |
| | Negative Electrode: 154.33 ppm | | |
| Comparative Example 2 | Positive Electrode: 112.88 ppm; | 1260 min | 97.89% |
| | Negative Electrode: 178.15 ppm | | |
| Comparative Example 3 | Positive Electrode: 140.91 ppm; | 1260 min | 96.45% |
| | Negative Electrode: 186.30 ppm | | |

It can be seen from Table 1 that, in the embodiments of the present application, each time the drying processes are performed, the temperature and the vacuum level are readjusted, and Compared with the drying processes in the previous time, the temperature is sequentially decreased, the vacuum level is sequentially increased, the entire baking time is short, the baking efficiency is high, the required energy consumption is low, and the moisture content after baking is low, which may meet the specification requirements, and the qualified rate is high.

In the above embodiments, different parts of the technical solution are given different levels of description in different embodiments, and some features that are not specified in a particular embodiment can be found in the relevant descriptions of other embodiments.

In the description of the present application, it is to be understood that the terms "first", "second", and the like are used for descriptive purposes only and are not to be construed as indicating or implying relative importance or implying an amount of indicated technical features. Thus, features denoted by "first" and "second" may expressly or implicitly include one or a plurality of features.

## Claims

1. A drying method for a lithium-ion battery, comprising:
step 1: placing a cell to be dried in an oven;
step 2: performing following drying processes for a plurality of rounds: adjusting a temperature and a vacuum level in the oven, vacuum-drying the cell to be dried in the oven for a preset period of time under a certain temperature and a certain vacuum level, and releasing the vacuum in the oven; wherein when performing the drying processes for a next time, the temperature and the vacuum level in the oven are readjusted, so as to decrease the temperature in a stepwise manner compared to the drying processes in a previous time and so as to increase the vacuum level in a stepwise manner compared to the drying processes in the previous time; and
step 3: performing a moisture test on the cell to be dried; wherein if a test result is qualified, ending the drying, and if the test result is unqualified, repeating the step 2.

2. The drying method for the lithium-ion battery according to claim 1, wherein in the step 2, the drying processes are performed for three times, and when the drying processes are performed for a first time, the temperature in the oven is adjusted to T1, and the vacuum level is adjusted to P1; when the drying processes are performed for a second time, the temperature in the oven is adjusted to T2, and the vacuum level is adjusted to P2; and when the drying processes are performed for a third time, the temperature in the oven is adjusted to T3, and the vacuum level is adjusted to P3, wherein T1, T2, and T3 satisfy: T1 > T2 > T3, and P1, P2, and P3 satisfy: P1 < P2 < P3;
wherein T1, T2, and T3 satisfy: 80 °C ≤ T1 ≤ 120 °C, 60 °C ≤ T2 ≤ 100 °C, and 40 °C ≤ T3 ≤ 80 °C; and
wherein P1, P2, and P3 satisfy: 10 Pa ≤ P1 ≤ 100 Pa, 100 Pa ≤ P2 ≤ 300 Pa, and 200 Pa ≤ P3 ≤ 500 Pa.

3. The drying method for the lithium-ion battery according to claim 2, wherein each time the drying processes are performed, the preset periods of time for vacuum drying the cell to be dried in the oven are different.

4. The drying method for the lithium-ion battery according to claim 3, wherein when the drying processes are performed for the first time, the preset period of time for vacuum drying the cell to be dried is h1; when the drying processes are performed for the second time, the preset period of time for vacuum drying the cell to be dried is h2; and when the drying processes are performed for the third time, the preset period of time for vacuum drying the cell to be dried is h3;
wherein h1, h2, and h3 satisfy: 60 minutes ≤ h1 ≤ 200 minutes, 10 minutes ≤ h2 ≤ 300 minutes, and 200 minutes ≤ h3 ≤ 500 minutes.

5. The drying method for the lithium-ion battery according to claim 1, wherein the oven is preheated before step 2.

6. The drying method for the lithium-ion battery according to claim 5, wherein a preheating duration for the oven is h4, wherein h4 satisfies: 40 minutes ≤ h4 ≤ 100 minutes.

7. The drying method for the lithium-ion battery according to claim 1, wherein in step 2, an inert gas is filled into the oven for releasing vacuum.

8. The drying method for the lithium-ion battery according to claim 7, wherein the inert gas may be at least one of helium, neon, argon, krypton, xenon, and nitrogen.

9. The drying method for the lithium-ion battery according to claim 8, wherein a purity of nitrogen is greater than or equal to 99.9%.

10. The drying method for the lithium-ion battery according to claim 1, wherein the drying processes in the step 2 is performed for 3 to 6 times.

11. A lithium battery, wherein a cell of the lithium battery is prepared by the drying method for the lithium-ion battery according to any one of claims 1 to 10.
